# EUROPÄISCHE PATENTSCHRIFT

(11) **EP 2 813 543 B1**
(45) Veröffentlichungstag und Bekanntmachung des Hinweises auf die Patenterteilung: **24.10.2018**
(21) Anmeldenummer: 13172063.3
(22) Anmeldetag: 14.06.2013
(51) Int. Cl.: B32B 17/10, C08K 5/27, B32B 17/00, C08K 5/00, C08K 5/134, C08K 5/3475

(54) **PVB-Folie mit UV-Schutz und geringem Gelbwert für Verbundsicherheitsglas**
PVB film with UV protection and low yellow value for composite safety glass
Feuille de PVB à haute protection contre les UV et à faible indice de jaune pour le verre de sécurité composite

(43) Veröffentlichungstag der Anmeldung: 17.12.2014
(73) Patentinhaber: Kuraray Europe GmbH, 65795 Hattersheim (DE)
(72) Erfinder: Lellig, Phillipp, 53840 Troisdorf (DE); Keller, Uwe, 53177 Bonn (DE)
(74) Vertreter: Kisters, Michael Marcus

(56) Entgegenhaltungen:
- EP-A1- 1 795 337
- EP-A1- 1 977 885
- DE-A1-102010 003 316

## Beschreibung

### Technisches Gebiet

Die Erfindung betrifft weichmacherhaltige Folien auf Basis von Polyvinylacetal mit UV-Schutz und geringem Gelbwert sowie damit hergestellte Glaslaminate.

### Stand der Technik

Marktübliche weichmacherhaltige Polyvinylbutyral-Folie (PVB-Folie) für Verbundverglasungenen ist seit vielen Jahrzehnten mit UV-Absorbern ausgerüstet, damit UV-Strahlung im Gegensatz zum sichtbaren Licht das Verbundglas nicht vollständig durchdringen kann. Auf diese Weise kann auf einfache Art ein Schutz vor schädigender UV-Strahlung für sich hinter dem Verbundglas befindliche Personen oder Objekte sichergestellt werden. Dies stellt neben dem Schutz vor Schnittverletzungen den wesentlichen Eigenschaftsvorteil gegenüber monolithischem Glas dar, da dieses für UV-Strahlung weitgehend transparent ist.

Besonders bewährt und verbreitet werden als UV-Absorber Abkömmlinge des 2-Hydroxyphenylbenzotriazols verwendet, welche mit verschiedenen Substitutionsmustern z.B. unter den Handelsnamen Tinuvin P, Tinuvin 328, Tinuvin 327, Tinuvin 326 erhältlich sind. Die hier genannten UV-Absorber vom Benzotriazol-Typ sind in PVB-Folie für ihre herausragende Langzeitstabilität, gute Löslichkeit und hohe Absorptionsleistung in fast dem gesamten UV-Bereich bekannt. Des Weiteren lassen sich die genannten UV-Absorber auf besonders einfache Weise bei der Extrusion in die Folienmasse einbringen, da sie auch in den üblicherweise verwendeten Weichmachern, wie z.B. 3G8, relativ gut löslich sind und so einfach vor Extrusion dem Weichmacher zugesetzt werden können.

Zusätzlich weisen die oben genannten UV-Absorber Schmelzpunkte auf, die wesentlich unter der bei PVB-Folie üblichen Extrusionstemperatur von ca. 200 °C liegen. Begünstigt werden diese Löslichkeits- und Schmelzeigenschaften der genannten UV-Absorber durch deren relativ geringes Molekulargewicht. Dieses, zusammengenommen mit der guten Löslichkeit in der Folienmatrix, führt jedoch auch zu einem hohen Migrationsvermögen in derselben. Besonders im Architekturbereich wird aber einmal verbautes Verbundsicherheitsglas (VSG) unter Umständen erst nach mehreren Jahrzehnten ersetzt, so dass sich die Frage stellt, ob ein dauerhafter UV-Schutz bei schleichendem Verlust von UV-Absorber über die offenen Kanten des VSG aufrechterhalten werden kann.

Darüber hinaus werden einigen der genannten Benzotriazol UV-Absorber gesundheits- oder umweltschädliche Eigenschaften zugeschrieben. Entsprechend ist es unerwünscht, wenn beim Abwischen von VSG-Elementen (z.B. als Teil einer Glastheke, an welcher ausgeschenkt wird und Speisen serviert werden) mit jedem Wischvorgang auch nur geringe Mengen an UV-Absorber über die Kanten abgegeben und anschließend flächig verteilt werden.

Je nach Substitutionsmuster der genannten UV-Absorber findet Absorption neben dem UV-Bereich mehr oder weniger stark auch noch im sichtbaren Bereich des Spektrums statt, so dass diese UV-Absorber je nach Einsatzmenge und Substituentenverteilung eine gewisse Gelbfärbung der PVB-Folie verursachen. Hier hat sich gezeigt, dass bei identischer Einsatzmenge der Einfluss auf die Gelbfärbung der Folie in der Reihe Tinuvin-326, Tinuvin-327, Tinuvin-P, Tinuvin-328 abnimmt. Trotzdem besteht Bedarf nach alternativen UV-Absorbern, welche bei gleich guter oder besserer UV-Filterwirkung wie UVA-328 einen nochmals reduzierten Beitrag zur Gelbfärbung aufweisen.

Neben UV-Absorbern wird Polyvinylbutyral häufig mit phenolischen Antioxidantien ausgerüstet, deren Aufgabe es ist, bei der Folienextrusion durch hohe Verarbeitungstemperaturen ausgelöste radikalische Spaltungsreaktionen zu unterbinden. Hierdurch wird die Länge der Polymerketten im Wesentlichen konstant gehalten, so dass die mechanischen Eigenschaften des extrudierten Materials als Folge des Extrusionsvorganges nicht verschlechtert werden.

Viele phenolische Antioxidantien bringen aber den Nachteil mit sich, je nach Extrusionsbedingungen auch eine Gelbfärbung zu verursachen, welche auf Reaktionsprodukte der Antioxidantien zurückzuführen ist. Auch in einer fertigen, bereits zwischen zwei Glasscheiben verklebten PVB-Folie können phenolische Antioxidantien unter UV-Bestrahlung - insbesondere bei dauerhaft erhöhter Temperatur - nachträglich eine Vergilbung verursachen, welche nicht nur aus ästhetischen Gründen unerwünscht ist, sondern auch die Lichttransmission des Glaslaminates mit der Zeit reduziert.

Die zur Herstellung von PVB-Folie kommerziell bedeutendste Gruppe phenolischer Antioxidantien enthält die Teilstruktur (3,5-di-tert-butyl-4-hydroxyphenyl)propionat und führt bei Verwendung in PVB-Folie bei UV- und/oder Temperatureinwirkung im Glaslaminat zu Vergilbung. Verbindungen mit dieser Teilstruktur werden unter den Handelsnamen Irganox 1010, Irganox 1076, Irganox 1035 und Hostanox 03 angeboten.

### Aufgabe

Aufgabe der vorliegenden Erfindung war es, eine Klebefolie für Verbundglas bereitzustellen, die in diesem eine geringe UV-Transmission sowie einen besonders niedrigen Gelbwert aufweist und in welcher ein darin enthaltender UV-Absorber eine geringe Neigung zu Migration besitzt.

### Darstellung der Erfindung

Gegenstand der vorliegenden Erfindung ist daher eine Folie, enthaltend mindestens ein Polyvinylacetal, mindestens einen Weichmacher und 0,01 - 1,5 Gew.% eines UV-Absorbers der Formel 1 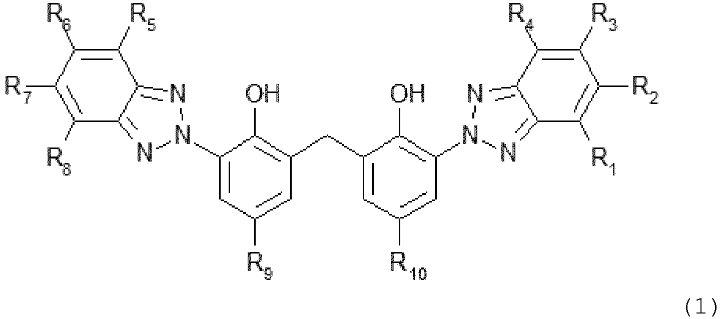 mit
R1, R2, R3, R4, R5, R6, R7, R8, R9, R10 = H, Halogenatom, Alkyl-, Hydroxyalkyl-, Alkoxyalkylrest mit jeweils 1 - 20 Kohlenstoffatomen,
R9, R10 = verzweigt oder unverzweigt Alkyl, Hydroxyalkyl, oder Alkoxyalkylrest mit jeweils 1 - 50 Kohlenstoffatomen.

Überraschenderweise wurde gefunden, dass bei Verwendung eines UV-Absorbers gemäß Formel 1 trotz hohen Molekulargewichtes und im Vergleich zu den bekannten UV-Absorbern schlechterer Löslichkeit in Weichmachern eine nach Lamination trübungsfreie Folie mit geringer UV-Transmission und gleichzeitig geringem Gelbwert erhalten werden kann. Dies ist umso überraschender, als dass der Schmelzpunkt des UV-Absorbers sogar im Bereich der Extrusionstemperatur der Folie liegen kann, ohne dass Trübung oder Gelbwerterhöhung beobachtet werden.

Bevorzugt werden daher UV-Absorber gemäß Formel 1 mit einem Schmelzpunkt von über 100 °C, über 120°C, über 140°C und am meisten bevorzugt von 160° eingesetzt.

Bevorzugt enthalten erfindungsgemäße Folien als UV-Absorber gemäß Formel 1 die Verbindung (2,2'-methanediylbis[6-(2H-benzotriazol-2-yl)-4-(2,4,4-trimethylpentan-2-yl)phenol), CAS-Nr. 103597-45-1 oder wie nachfolgend dargestellt:

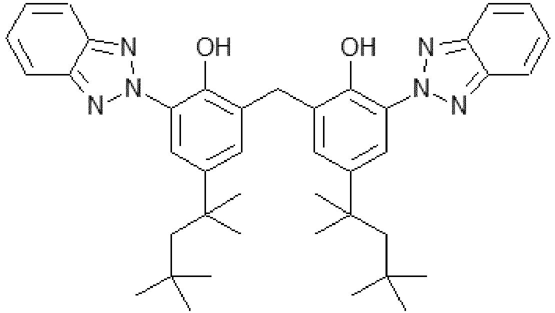

Diese Verbindung ist kommerziell z.B. von der BASF SE unter dem Handelsnamen Tinuvin 360 erhältlich.

Weiterhin ist Gegenstand der Erfindung ein Verfahren zur Herstellung einer wie oben definierten Folie durch Mischen von Polyvinylacetal, mindestens einen Weichmacher und dem mindestens einem UV-Absorber der Formel 1 in fester Form in einem Mischaggregat und anschließender Extrusion der erhaltenen Mischung. Als Mischaggregat können Mischer, Extruder oder Kneter eingesetzt werden. Insbesondere geeignet sind die Extruder, in denen die erhaltene Mischung mittels eines Breitschlitzwerkzeugs zur Folie extrudiert wird. Hier kann die Mischung im vorderen Teil des Extruders stattfinden wobei im weiteren Teil des Extruders das Aufschmelzen und Formgeben erfolgt.

Hierbei kann der in fester Form vorliegende UV-Absorber beispielsweise direkt als Pulver oder Granulat in den Einzugsbereich eines Extruders zugeführt werden. Optional kann der in fester Form vorliegende UV-Absorber auch nach Vormischung mit einem als Pulver oder Granulat vorliegenden Polyvinylacetal zugeführt werden.

Bevorzugt wird der UV-Absorber aber in einer Trägerflüssigkeit wie dem Weichmacher suspendiert dem Mischaggregat zugeführt.

Erfindungsgemäße Folien enthalten mindestens einen UV-Absorber gemäß Formel (1) bevorzugt in einer Menge von 0,01 bis 1,5 Gew.%, besonders bevorzugt in einer Menge von 0,05 bis 0,80 Gew.%, und am meisten bevorzugt in einer Menge von 0,10 bis 0,50 Gew.%.

In einer zweiten Variante der Erfindung enthalten die Folien zusätzlich mindestens ein Antioxidanz in einer Menge von 0,005 bis 0,5 Gew.%.

Bei der erfindungsgemäßen Verwendung der UV-Absorber gemäß Formel 1 führt dazu das das Folienmaterial einem verringerten Anteil an UV-A Strahlung aufgesetzt wird. Dies kann dazu führen das aus bestimmten Antioxidantien hervorgehende gelbgefärbte Abbauprodukte nicht mehr durch Strahlung gebleicht werden. Bevorzugt werden daher Antioxidantien eingesetzt die solche Abbauprodukte nicht bilden, wie z.B. Antioxidantien die nicht eine Teilstruktur (3,5-di-tert-butyl-4-hydroxyphenyl)propionat bzw. eine Struktur vom Typ Hostanox 03 beinhalten. Antioxidantien die diese Teilstrukturen enthalten neigen z.T. schon während der Extrusion zur Gelbfärbung.

In einer dritten Variante der Erfindung enthält die Folie weniger als 1500 ppm an Antioxidantien der Formel (2) bzw. mit der Teilstruktur (3,5-di-tert-butyl-4-hydroxyphenyl)propionat oder des Typs Hostanox 03. 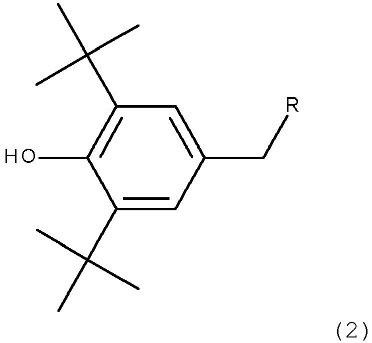 mit R = Kohlenwasserstoffradikal eines polyfunktionellen Alkohols, Oligoglykole mit 1 bis 10 Glykoleinheiten Kohlenwasserstoffrest mit 1 bis 20 Kohlenstoffatomen, N,P,S-substituierte Kohlenwasserstoffreste mit 1 bis 30 Kohlenstoffatomen oder Carbonsäureesterreste mit 1 bis 30 Kohlenstoffatomen in der Alkoholgruppe

Bevorzugt enthält die erfindungsgemäße Folie die genannten Antioxidantien nur in einem geringem Anteil, d.h. bevorzugt nicht mehr als 1000 ppm, bevorzugt zu nicht mehr als 500 ppm, bevorzugt zu nicht mehr als 250 ppm, nicht mehr als 100 ppm, nicht mehr als 50 ppm. Besonders bevorzugt enthält die erfindungsgemäße Folie die genannten Antioxidantien gar nicht, d.h. zu 0 ppm.

Beispielhaft für Verbindungen der Formel (2), die in der dritten Variante nicht oder nur in den genannten Anteilen eingesetzt werden solche mit den folgenden CAS-Nummern: 2082-79-3, 12643-61-0, 35074-77-2, 23128-74-7, 976-56-7, 65140-91-2, 1709-70-2, 34137-09-2, 27676-62-6, 6683-19-8, 41484-35-9, 991-84-4, 63843-89-0, 4221-80-1, 67845-93-6.

Ebenso beispielhaft für Verbindungen der Formel (2), die in der dritten Variante nicht oder nur in den genannten Anteilen eingesetzt werden solche gemäß den folgenden Strukturformeln:

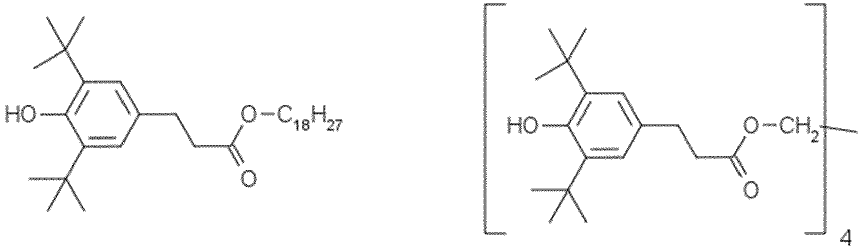

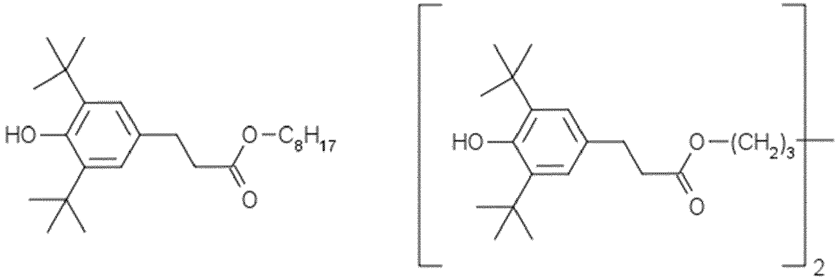

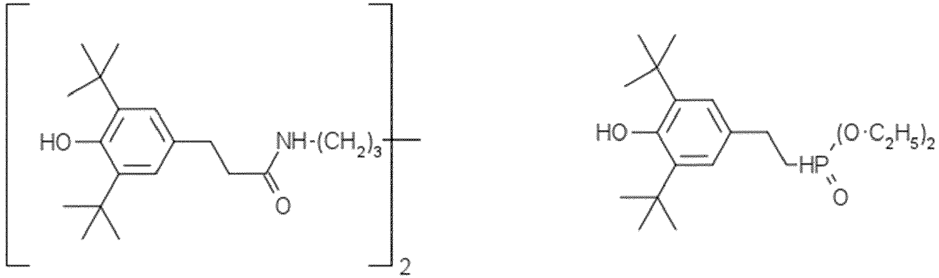

Verbindungen dieser Art sind z.B. im "Plastics Additives handbook" 5th Edition, Hanser-Verlag im Kapitel "Primary antioxidants" zu finden.

In einer vierten Variante der Erfindung können Antioxidantien, welche die Teilstruktur (3,5-di-tert-butyl-4-hydroxyphenyl)propionat oder die Struktur vom Typ Hostanox 03 nicht enthalten, in einer Menge von 0,005 bis 0,5 Gew.%, bevorzugt 0,02 bis 0,15 Gew.% und am meisten bevorzugt 0,03 bis 0,1 Gew.% in der Folie enthalten sein.

Solche geeigneten Antioxidantien sind z.B. Verbindungen der Formel (3) oder zweikernige phenolische Antioxidantien vom Typ Lowinox 44B25 oder Irganox 129, einkernige Antioxidantien vom Typ Songsorb 2908 (CAS: 67845-93-6), BHT (CAS: 128-37-0), p-Octylphenol, mehrkernige wie z.B. Topanol CA (CAS: 1843-03-4) oder Wingstay L (31851-03-3). 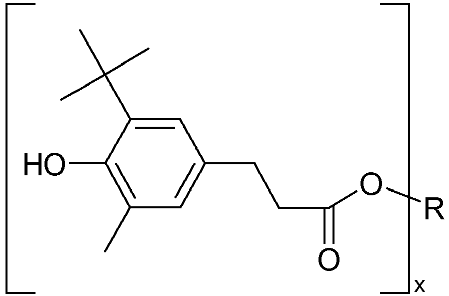 (3)
mit R = Kohlenwasserstoffradikal eines polyfunktionellen Alkohols, Oligoglykole mit 1 bis 10 Glykoleinheiten oder Kohlenwasserstoffrest mit 1 bis 20 Kohlenstoffatomen sowie X = 1, 2, 3 oder 4
Ebenfalls kommen phenolische Antioxidantien in Betracht, welche ein oder mehrere Schwefelatome enthalten, jedoch die Teilstruktur (3,5-di-tert-butyl-4-hydroxyphenyl)propionat oder die vom Typ Hostanox 03 nicht enthalten.

Antioxidantien gemäß Formel (3) können insbesondere Triethylenglykol-bis-3-(3-tert-butyl-4-hydroxy-5-methylphenyl)propionat, CAS-Nr. 36443-68-2 sein. Dieses ist kommerziell z.B. von Songwon als "Songnox 2450" oder von der BASF SE als "Irganox 245" erhältlich.

Selbstverständlich können durch Variation der Substituenten auf einfache Weise weitere analoge Strukturen generiert werden, welche entsprechend im Rahmen der Erfindung eingesetzt werden können.

Gleichzeitig ist der Gelbwert (db) erfindungsgemäßer Folien kleiner 2, bevorzugt kleiner 1,5, bevorzugt kleiner 1 und bevorzugt kleiner 0,6 und besonders bevorzugt kleiner 0,4. Der Gelbwert (db) der erfindungsgemäßen Folien wird bestimmt an einem Laminat bestehend aus der Folie mit einer Dicke von 0,76 mm zwischen zwei Scheiben Klarglas einer Dicke von 2 mm. Der Farbbeitrag des Glases wird durch Einmessen eines identischen Glaspaares ohne Folie als Referenz herausgemessen.

Die Gelbheit der Folie kann auch durch die Transmission der Folie nach EN 410 bei 430 nm bestimmt werden. Insbesondere weisen erfindungsgemäße Folien daher bei einer Dicke von 0,76 mm in einem Laminat zwischen zwei Scheiben Klarglas (z.B. Planilux) mit jeweils einer Dicke von 2 mm eine Lichttransmission bei 430 nm gemäß EN 410 von größer 75%, besonders bevorzugt von größer 80%, 85%, 86%, 87% oder 88% auf.

Der Gelbwert (db) bzw. die Transmission nach EN 410 bei 430 nm von Folien einer anderen Dicke kann nach schonendem Umformen (z.B. Übereinanderlaminieren von 2 x 0.38 mm, Pressen einer 1.52 mm dicken Folie auf die Dicke 0.76, Abschälen von - bzw. bis zu - der Dicke 0.76) auf die Referenzdicke 0.76 bestimmt werden.

Zusätzlich zur Verwendung geeigneter UV-Absorber und Antioxidantien kann die Einstellung eines geringen Alkalititers der erfindungsgemäßen Folien eine verbesserte Eigenfarbe und photothermische Stabilität der erfindungsgemäßen Folie bewirken.

Der Alkalititer wird, wie in den Beispielen angegeben, durch Neutralisation der erfindungsgemäßen Folie mit Salzsäure bestimmt und liegt bevorzugt zwischen 2 und 70, insbesondere zwischen 3 und 50 und am meisten bevorzugt zwischen 5 und 30.

Die Einstellung des Alkalititers kann durch entsprechende Neutralisation des Polyvinylacetals während oder nach dessen Herstellung durch Acetalisierung von Polvinylalkohol erfolgen oder durch Zugabe von Metallsalzen zur erfindungsgemäßen Mischung. Die Metallsalze fungieren bei der Verwendung der erfindungsgemäßen Folien für Verbundglaslaminate in der Regel auch als Antihaftmittel.

Erfindungsgemäße Folien können als Antihaftmittel Erdalkalimetall-, Zink-, Aluminium- bzw. Alkalimetallionen enthalten. Diese liegen in der Mischung/Folie in Form der Salze von ein- oder mehrwertigen anorganischen oder ein- oder mehrwertigen organischen Säuren vor. Beispiele für Gegenionen sind z.B. Salze organischer Carbonsäuren wie etwa Formiate, Acetate, Trifluoracetate, Propionate, Butyrate, Benzoate, 2-Ethylhexanoate usw., wobei bevorzugt Carbonsäuren mit weniger als 12 C-Atomen, bevorzugt weniger als 8, bevorzugt weniger als 6, bevorzugt weniger als 4 und besonders bevorzugt mit weniger als 3 C-Atomen verwendet werden. Beispiele für anorganische Gegenionen sind Chloride, Nitrate, Sulfate, Phosphate. Weitere Gegenionen können den Tensiden zuzurechnende Anionen sein, wie etwa Sulfonate oder Phosphatische Tenside.

Bevorzugt enthält die erfindungsgemäße Folie mehr als 5 ppm, bevorzugt mehr als 10 ppm, bevorzugt mehr als 15 ppm, bevorzugt mehr als 20 ppm, bevorzugt mehr als 25 ppm Ionen ausgewählt aus der Gruppe Be, Mg, Ca, Sr, Ba, Zink und Aluminium. Um unerwünschte Trübung zu vermeiden, sollten andererseits aber nicht mehr als 250 ppm der genannten mehrwertigen Metalle enthalten sein.

Gleichzeitig ist der Gehalt an Alkalimetallionen (Li, Na, K, Rb, Cs, Fr) in der weichmacherhaltigen, auf Polyvinylacetal basierenden Folie möglichst niedrig einzustellen. Bevorzugt enthält die Folie weniger als 150 ppm, bevorzugt weniger als 100 ppm, bevorzugt weniger als 75 ppm, bevorzugt weniger als 50 ppm, bevorzugt weniger als 25 ppm, bevorzugt weniger als 10 ppm und besonders bevorzugt weniger als 5 ppm Alkalimetallionen.

Überraschenderweise wurde festgestellt, dass erhöhte Mengen an erfindungsgemäß verwendetem Benzotriazol UV-Absorber gemäß Formel 1 trotz dessen Fähigkeit zur Komplexierung von 2-wertigen Metallionen die Haftungseinstellung nicht negativ beeinflussen. Insbesondere ist es möglich, reduzierte Haftungsniveaus einzustellen, wie sie bei der Verwendung von PVB/Glas-Laminaten im Fahrzeugbereich zum Erhalt ausreichender Penetrationsfestigkeiten erforderlich sind. Erfindungsgemäße Folien weisen dabei im Laminat zwischen zwei Scheiben Klarglas (2.1 mm Planilux®) Scherfestigkeiten von 6 - 30 N/mm², besonders von 8 - 20 N/mm² und insbesonders von 9 - 16 N/mm² auf.

Die erfindungsgemäß eingesetzten Polyvinylacetale sind als Acetalisierungsprodukte von Polyvinylalkohol (PVA) mit Aldehyden wie Butyraldehyd erhältlich. Erfindungsgemäße Folien können ein oder mehrere Polyvinylacetale enthalten, die sich in Molgewicht, Acetalisierungsgrad, Restalkoholgehalt oder Anzahl der Kohlenstoffatome der Acetalgruppe unterscheiden können.

Weiterhin können die genannten günstigen optischen Eigenschaften der erfindungsgemäßen Folie durch Selektion des zur Herstellung des Polyvinylacetals herangezogenen Polyvinylalkohol (PVA) verbessert werden. Liegen auf Stufe des PVA ungesättigte Einheiten in der Polymerkette als Fehlstellen vor, finden sich diese zwangsläufig auch im daraus erzeugten Polyvinylacetal wieder wodurch sich dessen Absorption von UV-Strahlung erhöht und Lichtstabilität verschlechtert. Die ungesättigten Einheiten können in Form von isolierten oder in Konjugation zueinander oder in Konjugation zu Carbonylbindungen stehenden Doppelbindungen vorliegen. Diese ungesättigten Einheiten lassen sich durch UV-Spektroskopie im PVA nachweisen.

Sehr hohe Anteile an Fehlstellen führen bei Messung des eingesetzten PVA in 4 Gew.%-iger Lösung in Wasser zu Extinktionen bei 280 nm von nahe 1. Zur Herstellung von erfindungsgemäß verwendetem Polyvinylacetal werden daher bevorzugt Polyvinylalkohole eingesetzt, die in einer 4 Gew.% wässrigen Lösung bei 280 nm Extinktionswerte von weniger als 0,5, von weniger als 0,3, insbesondere 0,2 und bevorzugt 0,1 aufweist.

Zusätzlich zu der Verwendung der UV-Absorber gemäß Formel 1 und der Verwendung von nicht zur Vergilbung neigenden phenolischen Antioxidantien und/oder der Verwendung von besonders fehlstellenarmen Polyvinylacetalen und/oder der Einstellung des Alkalititers können die erfindungsgemäßen Folien mit einem oder mehreren Lichtstabilisatoren, insbesondere mit sterisch gehinderten Aminen vom Typ HALS und/oder sterisch gehinderten Aminoethern (NOR-HALS) ausgerüstet werden.

Erfindungsgemäße Folien enthalten bevorzugt 0,005 - 1 Gew.-%, besonders bevorzugt 0,01 - 0,5 Gew.-%, insbesondere 0,03 - 0,3 Gew.-% und am meisten bevorzugt 0,05 - 0,25 Gew.-% sterisch gehinderte Amine vom HALS oder NOR-HALS Typ als Lichtstabilisatoren.

Besonders geeignete sterisch gehinderte Amine sind solche der allgemeinen Formeln (5), (6) und/oder (7). 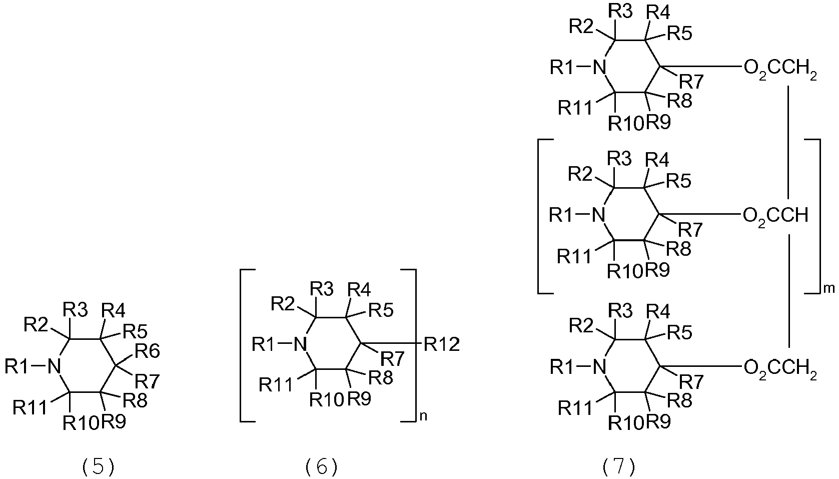 mit R1, R2, R3, R4, R5, R6, R7, R8, R9, R10, R11 = wie H, C1 - C20 Alkyl, Hydroxyalkyl, Alkoxyalkyl, Acyloxyalkyl, jeweils unsubstituiert oder durch Aldehyd-, Keto- oder Epoxidgruppen substituiert, R12:glatte Verbindung, C1 - C20 Alkyl, Hydroxyalkyl, Alkoxyalkyl, Acyloxyalkyl, jeweils unsubstituiert oder durch Aldehyd-, Keto- oder Epoxidgruppen substituiert, n : 2 - 4 und m : 1 - 10.

Verbindungen dieser Art sind kommerziell erhältlich, beispielsweise durch die Produkte Tinuvin 123 (NOR-HALS), Tinuvin 144, Tinuvin 622, Tinuvin 770 sowie dessen Di-N-methyliertes Derivat der BASF (Ciba Specialities). Besonders gut geeignet sind beispielsweise Songlight 2920 der Firma Songwon International, ADK Stab LA-57, LA-52 oder LA-62 der Fa. Asahi Denka Co. oder UVINUL 4050 H der BASF SE.

Zur Herstellung von Polyvinylacetal wird Polyvinylalkohol in Wasser gelöst und mit einem Aldehyd wie z.B. Butyraldehyd, Formaldehyd oder Propionaldehyd unter Zusatz eines Säurekatalysators acetalisiert. Das ausgefallene Polyvinylacetal wird abgetrennt, neutral gewaschen, ggf. in einem alkalisch eingestellten wässrigen Medium suspendiert, danach erneut neutral gewaschen und getrocknet.

Die zur Acetalisierung eingesetzte Säure muss nach erfolgter Reaktion wieder neutralisiert werden. Ein geringer Gehalt an Alkalimetallionen kann unter anderem bei der Synthese des Polyvinylacetals durch Verzicht auf die üblicherweise zur Neutralisation des Katalysators angewandten Natrium- oder Kaliumhydroxide bzw. Carbonate oder durch gründliches Waschen des bei der Acetalisierung erhaltenen Polyvinylacetals erzielt werden. Alternativ zu den Basen NaOH oder KOH, kann die Katalysatorsäure aus dem Acetalisierungsschritt z.B. durch Einblasen von Kohlendioxid oder Ethylenoxid neutralisiert werden.

Der Polyvinylalkoholgehalt des Polyvinylacetals kann durch die Menge des bei der Acetalisierung eingesetzten Aldehyds eingestellt werden.

Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 98 Mol% hydrolysiert und enthalten 1 bis 10 Gew. auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden.

Polyvinylacetale enthalten neben den Acetaleinheiten noch aus Vinylacetat und Vinylalkohol resultierende Einheiten. Die erfindungsgemäß verwendeten Polyvinylacetale weisen einen Polyvinylalkoholanteil von 12 - 24 Gew.%, bevorzugt von 14 - 23 Gew.%, bevorzugt von 16 - 22 Gew.%, bevorzugt von 17 - 21 Gew.% und insbesondere von 18 - 20 Gew.% auf.

Der Polyvinylacetatgehalt des erfindungsgemäß eingesetzten Polyvinylacetals liegt bevorzugt unter 5 Gew.%, unter 3 Gew.% oder unter 1 Gew.%, besonders bevorzugt unter 0,75 Gew.%, ganz besonders bevorzugt unter 0,5 Gew.% und insbesondere unter 0,25 Gew.%.

Aus dem Polyvinylalkoholanteil und dem Restacetatgehalt kann der Acetalisierungsgrad rechnerisch ermittelt werden.

Bevorzugt weisen die Folien einen Gesamtweichmachergehalt d.h. der Anteil aller Weichmacher in der Folie im Bereich von 5 - 45 Gew.%, 12 - 36 Gew.%, 14 - 32 Gew.%, 16 - 30 Gew.%, insbesondere 20 - 28 Gew.% auf. Erfindungsgemäße Folien bzw. damit verklebte Laminate können einen oder mehrere Weichmacher enthalten.

Gut geeignet als Weichmacher für die erfindungsgemäßen Folien sind eine oder mehrere Verbindungen ausgewählt aus der folgenden Gruppe Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8) Di-2-butoxyethyladipat (DBEA), Di-2-butoxyethoxyethyladipat (DBEEA) Di-2-butoxyethylsebacat (DBES), Di-2-ethylhexylphthalat (DOP), Di-isononylphthalat (DINP) Triethylenglykol-bis-isononanoat, Triethylenglykol-bis-2-propylhexanoat, Tris(2-ethylhexyl)phosphat (TOF), 1,2-Cyclohexandicarbonsäurediisononylester (DINCH), Diisononyladipat (DINA) und Dipropylenglykolbenzoat.

Ganz besonders geeignet als Weichmacher für die erfindungsgemäßen Folien sind Weichmacher, deren Polarität, ausgedrückt durch die Formel 100 x O/(C+H) kleiner/gleich 9,4 ist, wobei O, C und H für die Anzahl der Sauerstoff-, Kohlenstoff- und Wasserstoffatome im jeweiligen Molekül steht. Die nachfolgende Tabelle zeigt erfindungsgemäß einsetzbare Weichmacher und deren Polaritätswerte nach der Formel 100 x O/(C+H).

| Name Abkürzung 100 x O/(C+H) | |
|---|---|
| Di-2-ethylhexylsebacat (DOS) | 5,3 |
| Di-iso-nonyladipat (DINA) | 5,3 |
| 1,2-Cyclohexandicarbonsäurediisononylester (DINCH) | 5,4 |
| Di-2-ethylhexyladipat (DOA) | 6,3 |
| Dihexyladipat (DHA) | 7,7 |
| Dibutylsebacat (DBS) | 7,7 |
| Triethylenglykol-bis-2-propylhexanoat | 8,6 |
| Triethylenglykol-bis-i-nonanoat | 8,6 |
| Di-2-butoxyethylsebacat (DBES) | 9,4 |
| Triethylenglykol-bis-2-ethylhexanoat (3G8) | 9,4 |

Weiterhin können die erfindungsgemäßen Mischungen oder Folien zusätzlich weitere Additive, wie zum Beispiel Antistatika, Füllstoffe, IR-Absorbierende Nanopartikel bzw. Chromophore, Farbstoffe, oberflächenaktive Substanzen, Bleichmittel, Stabilisatoren, Säure/Base-Puffer, Chelatbildner, Epoxygruppen enthaltende Verbindungen, Pigmente sowie Haftungsregulatoren enthalten.

Erfindungsgemäße Folien können zur Herstellung von Verbundglas d.h. zum Verkleben von mindestens zwei Glasscheiben oder als eine eine Glasscheibe mit einer weiteren transparenten steifen oder flexiblen Schicht verbindende Lage verwendet werden. Solche Verglasungen können vorteilhaft eingesetzt werden, wo es auf einen guten UV-Schutz bei gleichzeitig hoher Transparenz im sichtbaren Bereich des Lichts ankommt, wie z.B. in Bürogebäuden, öffentlichen Gebäuden wie etwa Schulen, Museen, Schaufensterverglasungen, Kraftfahrzeugen (Windschutzscheiben, Seitenverglasung, Glasdächer und Heckscheiben) oder Flugzeugverglasung. Des Weiteren als VSG Bauteil im Interieurbereich von Bürogebäuden, Restaurationsbetrieben, Badezimmern, Öffentlichen Toiletten usw. Insbesondere können die erfindungsgemäßen Folien auch in Funktionsbauteilen wie Photovoltaikmodulen (besonders für solche mit organischen Solarzellen), Display-Anwendungen (LED oder OLED Bildschirme, Fernseher, Computerbildschirme, Grossbildschirme), schaltbaren Glaselementen (besonders elektrochromen, photochromen, photoelektrochromen, bzw. des Typs "suspended parcticle device" oder Thermotrop) verwendet werden.

In den genannten Funktionsbauteilen schützt mindestens eine Lage der erfindungsgemäßen Folie eine dahinter befindliche aktive Schicht vor Schädigung durch Sonnenlicht bzw. UV-Strahlung. Im Fall photochromer Schichten kann durch Herausfiltern des UV-Anteils der Sonnenstrahlung zusätzlich deren Ansprechverhalten modifiziert werden, was dann stärker vom sichtbaren Licht als von UV-Strahlung beeinflusst wird.

### Prüf- und Messmethoden:

Die strahlungstechnischen Eigenschaften (Lichttransmissionsgrad TL, UV-Transmissionsgrad TUV, jeweils ausgedrückt in %) der zwischen 2 x 2.1 mm Planilux® laminierten Folie in Stärke 0,76 mm wurde gemäß DIN EN 410 (2011) auf einem UV/VIS-Spektrometer Perkin-Elmer Lambda 950 bestimmt.

Zur Bestimmung des Gelbwertes der extrudierten Folie wird ein Verbundglas mit Folie in Stärke 0,76 mm mit zwei Scheiben 2.1 mm Planilux® auf dem ColorQuest XE in Einstellung Hunterlab 2°/C gemessen. Bei dem Verfahren wird die Eigenfarbe des Glases durch Einmessens des Scheibenpärchens der identischen Glascharge als Nullprobe subtrahiert und der Beitrag der Zwischenschicht zur Gelbfärbung als Gelbwert db zahlenmäßig ermittelt.

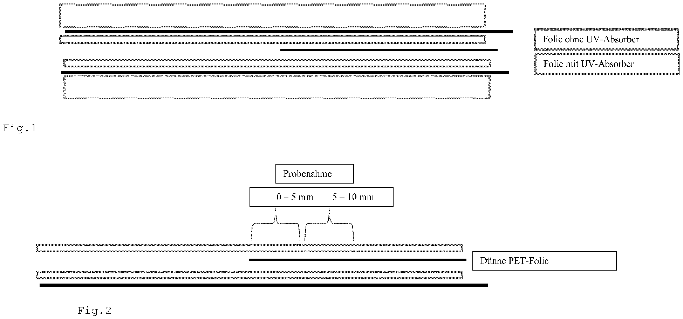

Zum Vergleich des Migrationsverhaltens von UV-Absorbern in PVB-Folie ist das Vorgehen wie folgt:
Es wird eine PVB-Folie in 0.76 mm Dicke mit dem gleichem Weichmacher wie in der Folie, welche den zu untersuchenden UV-Absorber enthält, bereitgestellt. Diese Folie dient als Migrationssenke und ist zunächst frei von UV-Absorber. Dann wird diese Folie und die Folie mit dem zu untersuchenden UV-Absorber wie folgt zu einem Sandwich kombiniert (Figur 1):
2 mm Glaslage als stützendes Element
100 - 200 µm dicke PET-Folie als stützendes Element Folie ohne UV-Absorber
ca. 50 µm dünne PET-Folie (z.B. Southwall XIR 75): hälftig Folie mit UV-Absorber
100 - 200 µm dicke PET-Folie als stützendes Element
2 mm Glaslage als stützendes Element

Die Gläser und die beiden äußeren Lagen an PET dienen hierbei lediglich dazu, eine normale Verbundherstellung inklusive Autoklavenschritt zu ermöglichen jedoch gleichzeitig eine vereinfachte Probenpräparation durch Abziehen des äußeren PET zu gewährleisten. Durch die hälftige Ausführung der dünnen PET-Folie sind die beiden PVB-Folien in der einen Hälfte des Folienstapels direkt miteinander verklebt während sie in der anderen Seite des Folienstapels durch die dünne PET-Folie separiert sind. Die dünne PET-Folie fungiert hierbei in dieser Hälfte als Migrationssperre für Weichmacher und UV-Absorber. Nach Herstellung eines Vorverbundes in einem industrieüblichen Vakuumbeutel werden die Testlaminate einem üblichen Autoklavenprozess mit einer Gesamtdauer von 90 Minuten, einem Maximaldruck von 12 bar und einer während 30 Minuten gehaltenen Maximaltemperatur von 140 °C unterzogen. Dann werden die Testlaminate zunächst eine ausreichend lange Zeit (z.B. 48h) bei RT gelagert, um ein Wiederausperlen von Luft zu vermeiden. Danach werden die Testlaminate während 4 Wochen in einem Wärmeschrank bei 100 °C gelagert. Hierbei findet die Migration von UV-Absorber aus der diesen enthaltenden PVB-Schicht in die davon freie PVB-Schicht statt. Durch Entnahme einer Folienprobe aus der ursprünglich UV-Absorber-freien PVB-Lage in definiertem Abstand von der Kante der dünnen PET-Folie (5 - 10 mm, Figur 2) und Quantifizierung des eingewanderten UV-Absorbers, lässt sich die Migrationsneigung vergleichend bestimmen. Die Quantifizierung erfolgt mithilfe von Gaschromatographischer Analyse oder photometrisch unter Nutzung spezifischer Absorptionsbanden des betreffenden UV-Absorbers.

Zur Beurteilung der Haftung einer PVB-Folie wurde der Kompressionsschertest in Anlehnung an DE 19756274 A1 an einem Glas/Glas-Laminat durchgeführt. Dafür wurden 10 Proben mit den Maßen 25,4 x 25,4 mm unter einem Winkel von 45° mit einem Vorschub von 2,5 mm/min in eine Prüfapparatur gemäß DE 19756274 A1 eingespannt und vermessen. Die Maximalkraft, die zur Abscherung der Folie vom Glas benötigt wird, bezogen auf die Probenfläche, wurde dann über die 10 Proben gemittelt.

Die Schmelzpunkte erfindungsgemäßer UV-Absorber können auf einer halbautomatischen Schmelzpunktbestimmungsapparatur des Typs "Mettler FP5" gemessen werden. Dabei werden pro Material jeweils drei Schmelzpunktröhrchen (Aussendurchmesser 1,55mm, Innendurchmesser 1,15mm, Länge 80 mm) ungefähr 1 cm hoch mit der Probe gefüllt. Die Aufheizrate von 1°/min beginnt 10° unterhalb der erwarteten Schmelztemperatur. Häufig finden sich Angaben zu Schmelzpunkten auch in den technischen Datenblättern der Hersteller von UV-Absorber.

### Beispiele

Es wurden Folien mit den Mischungen der in den nachfolgenden Tabellen aufgeführten Zusammensetzungen hergestellt und als Laminat zwischen 2 Glasscheiben vom Typ Planilux® der Stärke 2.1 mm verarbeitet und untersucht. Die Extrusionstemperatur lag in allen Fällen bei 200 °C. Bei den Vergleichsbeispielen 2 - 4 konnte der UV-Absorber jeweils im Weichmacher gelöst der Extrusionsmischung hinzugefügt werden. Bei Beispiel 1 war der UV-Absorber lediglich im Weichmacher suspendiert.

Das Beispiel 1 zeigt im Vergleich zu Vergleichsbeispielen 2 - 4 einen sehr günstigen Kompromiss aus geringem Gelbwert und geringer UV-Transmission. Überraschenderweise wurde zusätzlich auch ein sehr geringer Haze-Wert erhalten, obwohl der erfindungsgemäße UV-Absorber einem Schmelzpunkt von > 190°C aufweist und die Extrusion bei nur 200°C durchgeführt wurde. Überraschenderweise neigt der erfindungsgemäße UV-Absorber darüber hinaus viel weniger zu Migration als derjenige aus Vergleichsbeispiel 2.

Es bedeuten in der Tabelle
PVB Polyvinylbutyral
3G8 Triethylenglykol-bis-2-ethylhexanoat
DBEA Di-2-butoxyethyladipat (ggf. in Gew-Mischungsverhältnis mit 3G8)
TL Lichttransmission TL nach EN 410 (380 - 780 nm)
db Gelbwert db ermittelt über Colorquest XE
(a) Angaben in Gew% bezogen auf die Folie

**Tabelle 1**

| | **Beispiel 1** | **Vergleich 2** | **Vergleich 3** | **Vergleich 4** |
|---|---|---|---|---|
| UV-Absorber Typ | UVA 360 | UVA 328 | UVA P | UVA 326 |
| Dicke der extrudierten Folie | 0,76 mm | 0,76 mm | 0,76 mm | 0,76 mm |
| PVB (Mowital F1) | 72,5 | 72,5 | 72,5 | 72,5 |
| Weichmacher 3G8 | 25 | 25 | 25 | 25 |
| Weichmacher DBEA | 2,5 | 2,5 | 2,5 | 2,5 |
| Tinuvin 360 | 0,15 | | | |
| Tinuvin 328 | | 0,15 | | |
| Tinuvin P | | | 0,15 | |
| Tinuvin 326 | | | | 0,15 |
| Mg-Acetat x 4 H2O | 0,0375 | 0,0375 | 0,0375 | 0,0375 |
| Irganox 245 | 0,0365 | 0,0365 | 0,0365 | 0,0365 |
| BHT | 0,05 | 0,05 | 0,05 | 0,05 |

| **Optische Prüfungen an Laminaten 2 x 2.1 mm Planilux** | | | | |
|---|---|---|---|---|
| Lichtdurchlassigkeit TL [EN410] | 90,5 | 91,5 | 91,5 | 90,0 |
| Gelbwert db Colorquest | 0,18 | 0,17 | 0,2 | 0,41 |
| Trübung Haze | 0,12 | 0,12 | 0,3 | 0,25 |
| Transmission-UV (300-380; EN410:2011) in % | 0,15 | 0,33 | 0,94 | 0,00 |

| **Migrationstest 4 Wochen bei 100 °C** | | | | |
|---|---|---|---|---|
| Gew.-% UVA in Zone 5 - 10 mm | 0,0042 | 0,0197 | - | - |
| % UVA relativ zu Ursprungskonzentration in Quellfolie | 2,80% | 13,13% | - | - |

| **Kompressionsschertest an Laminat mit 2 x 2.1 mm Planilux** | | | | |
|---|---|---|---|---|
| N/mm2 | 12,4 | 11,6 | - | - |

## Patentansprüche

1. Folie, enthaltend mindestens ein Polyvinylacetal, mindestens einen Weichmacher und 0.01 - 1,5 Gew.% mindestens eines UV-Absorbers der Formel 1 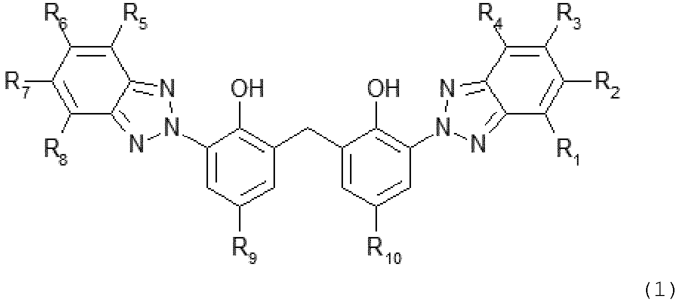 mit
R1, R2, R3, R4, R5, R6, R7, R8 = H, Halogenatom, Alkyl-, Hydroxyalkyl-, Alkoxyalkylrest mit jeweils 1 - 20 Kohlenstoffatomen,
R9, R10 = verzweigt oder unverzweigt Alkyl, Hydroxyalkyl, oder Alkoxyalkylrest mit jeweils 1 - 50 Kohlenstoffatomen.

2. Folie nach Anspruch 1 **dadurch gekennzeichnet, dass** die Folie weniger als 1500 ppm an Antioxidantien der Formel (2) 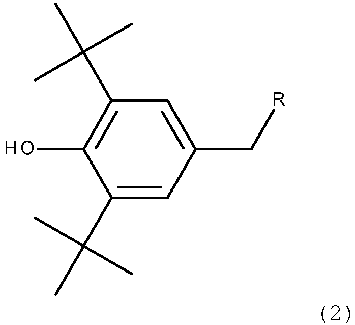 mit R = Kohlenwasserstoffradikal eines polyfunktionellen Alkohols, Oligoglykole mit 1 bis 10 Glykoleinheiten Kohlenwasserstoffrest mit 1 bis 20 Kohlenstoffatomen, N,P,S- substituierte Kohlenwasserstoffreste mit 1 bis 30 Kohlenstoffatomen oder Carbonsäureesterreste mit 1 bis 30 Kohlenstoffatomen in der Alkoholgruppe bzw. mit der Teilstruktur (3,5-di-tert-butyl-4-hydroxyphenyl)-propionat oder des Typs Hostanox 03 (CAS 32509-66-3) enthält.

3. Folie nach einem der Ansprüche 1 oder 2 **dadurch gekennzeichnet, dass** die Folie Antioxidantien, welche die Teilstruktur (3,5-di-tert-butyl-4-hydroxyphenyl)propionat oder die Struktur vom Typ Hostanox 03 (CAS 32509-66-3) nicht enthalten, in einer Menge von 0,005 bis 0,5 Gew.% aufweisen.

4. Folie nach Anspruch 3 **dadurch gekennzeichnet, dass als** Antioxidantien, welche die Teilstruktur (3,5-di-tert-butyl-4-hydroxyphenyl)propionat oder die Struktur vom Typ Hostanox 03 (CAS 32509-66-3) nicht enthalten, Verbindungen der Formel (3) eingesetzt werden 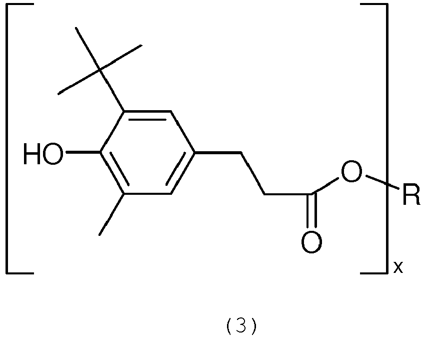 mit R = Kohlenwasserstoffradikal eines polyfunktionellen Alkohols, Oligoglykole mit 1 bis 10 Glykoleinheiten oder Kohlenwasserstoffrest mit 1 bis 20 Kohlenstoffatomen sowie X = 1, 2, 3 oder 4.

5. Folie nach Anspruch 3 **dadurch gekennzeichnet, dass als** Antioxidantien, welche die Teilstruktur (3,5-di-tert-butyl-4-hydroxyphenyl)propionat oder die Struktur vom Typ Hostanox 03 (CAS 32509-66-3) nicht enthalten zweikernige phenolische Antioxidantien vom Typ Lowinox 44B25 (CAS: 85-60-9) Hostanox 03 (CAS 32509-66-3) oder Irganox 129 (CAS: 35958-30-6), einkernige Antioxidantien vom Typ Songsorb 2908 (CAS: 67845-93-6), BHT (CAS: 128-37-0), p-Octylphenol, mehrkernige wie z.B. Topanol CA (CAS: 1843-03-4) oder Wingstay L (31851-03-3) eingesetzt werden.

6. Folien nach einem der Ansprüche 1 bis 5 **dadurch gekennzeichnet, dass** die Folie einen Gelbwert db von kleiner 2, bestimmt an einem Laminat bestehend aus der Folie mit einer Dicke von 0,76 mm zwischen zwei Scheiben Klarglas einer Dicke von 2 mm, aufweist.

7. Folie nach einem der Ansprüche 1 bis 6 **dadurch gekennzeichnet, dass** die Folien ein oder mehrere Metallionen aus der Gruppe Be, Mg, Ca, Sr, Ba, ZN und Al in einem Anteil von mehr als 5 ppm enthalten.

8. Folie nach einem der Ansprüche 1 bis 7 **dadurch gekennzeichnet, dass** die Folie sterisch gehinderte Amine vom HALS oder NOR-HALS Typ als Lichtstabilisatoren aufweist.

9. Folie nach einem der Ansprüche 1 bis 8 **dadurch gekennzeichnet, dass** das Polyvinylacetal einen Polyvinylalkoholanteil von 12 bis 24 Gew.% aufweist.

10. Folie nach einem der Ansprüche 1 bis 9 **dadurch gekennzeichnet, dass** als UV-Absorber der Formel 1 (2,2'methanediylbis[6-(2H-benzotrialzol-2-yl)-4-(2,4,4-trimethylpentan-2-yl)phenol eingesetzt wird.

11. Folie nach einem der Ansprüche 1 bis 10 **dadurch gekennzeichnet, dass** als UV-Absorber der Formel 1 solche mit mit einem Schmelzpunkt von über 100 °C eingesetzt werden.

12. Verwendung der Folie nach einem der Ansprüche 1 bis 11 Zur Herstellung von Verbundglaslaminaten.

13. Verwendung der Folie nach Anspruche 1 bis 11 zur Herstellung von Museumsverglasung, Schaufensterverglasung, als Kraftfahrzeugverglasung, Flugzeugverglasung, in Photovoltaikmodulen in LED oder OLED Bildschirmen, Fernseher, Computerbildschirme, Grossbildschirme), in elektrochromen, photochromen, photoelektrochromen Glaselementen.

14. Verfahren zur Herstellung einer PVB-Folie nach einem der Ansprüche 1 bis 11 durch Mischen von Polyvinylacetal, mindestens einen Weichmacher und mindestens einem UV-Absorber der Formel 1 in fester Form in einem Mischaggregat und anschließender Extrusion der erhaltenen Mischung.

15. Verfahren nach Anspruch 14 **dadurch gekennzeichnet, dass** der UV-Absorber in einer Trägerflüssigkeit suspendiert dem Mischaggregat zugeführt wird.

## Claims

1. A film comprising at least one polyvinyl acetal, at least one plasticizer, and 0.01 - 1.5 % by weight of at least one UV absorber with formula 1 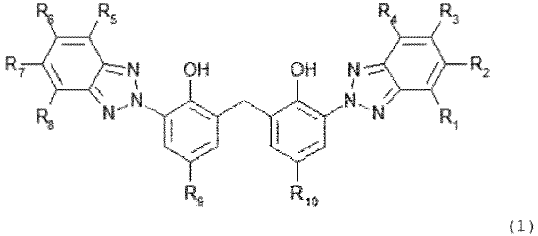 in which
R1, R2, R3, R4, R5, R6, R7, R8 = H, a halogen atom, or an alkyl, hydroxyalkyl or alkoxyalkyl residue respectively containing 1 to 20 carbon atoms,
R9, R10 = a branched or unbranched alkyl, hydroxyalkyl or alkoxyalkyl residue respectively containing 1 to 50 carbon atoms.

2. The film as claimed in claim 1, **characterized in that** the film contains less than 1500 ppm of antioxidants with formula (2) 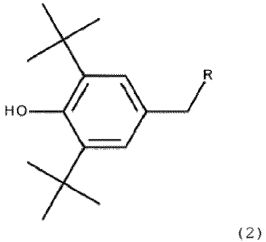 in which R = a hydrocarbon radical of a polyfunctional alcohol, an oligoglycol containing 1 to 10 glycol units, a hydrocarbon radical containing 1 to 20 carbon atoms, a N, P and/or S-substituted hydrocarbon residue containing 1 to 30 carbon atoms, or a carboxylic acid ester residue containing 1 to 30 carbon atoms in the alcohol group, or with the substructure (3,5-di-tert-butyl-4-hydroxyphenyl)propionate or of the type Hostanox 03 (CAS: 32509-66-3).

3. The film as claimed in claim 1 or claim 2, **characterized in that** the film comprises antioxidants which do not contain the substructure (3,5-di-tert-butyl-4-hydroxyphenyl)propionate or the structure of the type Hostanox 03 (CAS: 32509-66-3), in a quantity in the range 0.005 % to 0.5 % by weight.

4. The film as claimed in claim 3, **characterized in that** compounds with formula (3) 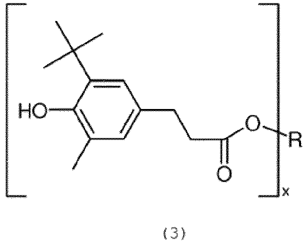 in which R = a hydrocarbon radical of a polyfunctional alcohol, an oligoglycol containing 1 to 10 glycol units or a hydrocarbon radical containing 1 to 20 carbon atoms and X = 1, 2, 3 or 4, are used as antioxidants which do not contain the substructure (3,5-di-tert-butyl-4-hydroxyphenyl)propionate or the structure of the type Hostanox 03 (CAS: 32509-66-3).

5. The film as claimed in claim 3, **characterized in that** binuclear phenolic antioxidants of the type Lowinox 44B25 (CAS: 85-60-9), Hostanox 03 (CAS: 32509-66-3) or Irganox 129 (CAS: 35958-30-6), mononuclear antioxidants of the type Songsorb 2908 (CAS: 67845-93-6), BHT (CAS: 128-37-0), p-octylphenol, or multi-nuclear such as, for example, Topanol CA (CAS: 1843-03-4) or Wingstay L (31851-03-3), are used as the antioxidants which do not contain the substructure (3,5-di-tert-butyl-4-hydroxyphenyl)propionate or the structure of the type Hostanox 03 (CAS: 32509-66-3).

6. The film as claimed in one of claims 1 to 5, **characterized in that** the film has a yellow value db of less than 2, determined on a laminate consisting of the film with a thickness of 0.76 mm between 2 panes of clear glass with a thickness of 2 mm.

7. The film as claimed in one of claims 1 to 6, **characterized in that** the films contain one or more metal ions from the group Be, Mg, Ca, Sr, Ba, Zn and Al in a proportion of more than 5 ppm based on the weight of the film.

8. The film as claimed in one of claims 1 to 7, **characterized in that** the film comprises at least one sterically hindered amine of the HALS or NOR-HALS type, as light stabilisers.

9. The film as claimed in one of claims 1 to 8, **characterized in that** the polyvinyl acetal has a polyvinyl alcohol content in the range 12 % to 24 % by weight.

10. The film as claimed in one of claims 1 to 9, **characterized in that** (2,2'methanediylbis[6-(2H-benzotriazol-2-yl)-4-(2,4,4-trimethylpentan-2-yl)phenol is used as the UV absorber with formula 1.

11. The film as claimed in one of claims 1 to 10, **characterized in that** a UV absorber having a melting point of more than 100 °C is used as the UV absorber with formula 1.

12. Use of the film as claimed in one of claims 1 to 11, for the manufacture of laminated glass.

13. Use of the film as claimed in claims 1 to 11, for the manufacture of museum glazing, display window glazing, motor vehicle glazing, aircraft glazing, in photovoltaic modules, in LED or OLED screens, televisions, computer screens, large format screens, in electrochromic, photochromic or photoelectrochromic glass elements.

14. A method for the manufacture of a PVB film as claimed in one of claims 1 to 11, by mixing polyvinyl acetal, at least one plasticizer and at least one UV absorber with formula 1 in solid form in mixing equipment and subsequently extruding the mixture obtained.

15. The method as claimed in claim 14, **characterized in that** the UV absorber is supplied to the mixing equipment suspended in a carrier liquid.

## Revendications

1. Feuille contenant au moins un acétal de polyvinyle, au moins un plastifiant et 0,01 à 1,5 % en poids d'au moins un filtre UV répondant à la formule 1 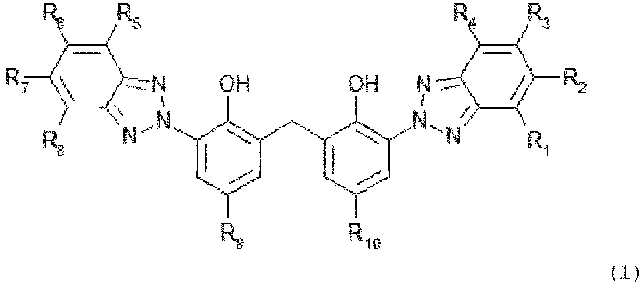 avec
R1, R2, R3, R4, R5, R6, R7, R8 = H, atome d'halogène, radical d'alkyle, d'hydroxyalkyle, d'alcoxyalkyle renfermant chacun 1 à 20 atomes de carbone,
R9, R10 = radical d'alkyle, d'hydroxyalkyle ou d'alcoxyalkyle, ramifié ou linéaire, renfermant chacun 1 à 50 atomes de carbone.

2. Feuille selon la revendication 1, **caractérisée en ce que** ladite feuille contient moins de 1500 ppm d'antioxydants répondant à la formule (2) 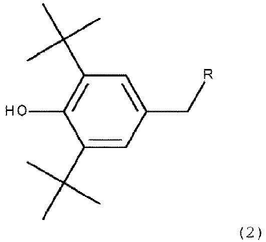 avec R = radical d'hydrocarbure d'un polyol, oligoglycols renfermant 1 à 10 unités de glycol, radical d'hydrocarbure renfermant 1 à 20 atomes de carbone, radical d'hydrocarbure pourvu de substituants N,P,S et renfermant 1 à 30 atomes de carbone, ou radicaux d'ester d'acide carboxylique renfermant 1 à 30 atomes de carbone dans le group d'alcool et/ou présentant la structure partielle égale au propionate de (3,5-di-tert.-butyl-4-hydroxyphényle) ou étant du type Hostanox 03 (CAS 32509-66-3).

3. Feuille selon l'une des revendications 1 ou 2, **caractérisée en ce que** ladite feuille comporte une quantité comprise entre 0,005 et 0,5 % en poids d'antioxydants qui ne contiennent ni la structure partielle égale au propionate de (3,5-di-tert.-butyl-4-hydroxyphenyle) ni la structure du type Hostanox 03 (CAS 32509-66-3).

4. Feuille selon la revendication 3, **caractérisée en ce que** l'on met en oeuvre, en tant qu'antioxydants qui ne contiennent ni la structure partielle égale au propionate de (3,5-di-tert.-butyl-4-hydroxyphenyle) ni la structure du type Hostanox 03 (CAS 32509-66-3), des composés répondant à la formule (3) 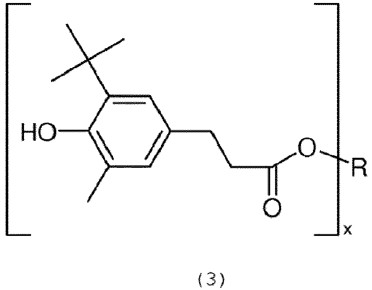 dans laquelle R = radical d'hydrocarbure d'un polyol, oligoglycols renfermant 1 à 10 unités de glycol, ou radical d'hydrocarbure renfermant 1 à 20 atomes de carbone, ainsi que X = 1, 2, 3 ou 4.

5. Feuille selon la revendication 3, **caractérisée en ce que** l'on met en oeuvre, en tant qu'antioxydants qui ne contiennent ni la structure partielle égale au propionate de (3,5-di-tert.-butyl-4-hydroxyphenyle) ni la structure du type Hostanox 03 (CAS 32509-66-3), des antioxydants phénoliques à deux noyaux du type Lowinox 44B25 (CAS: 85-60-9) Hostanox 03 (CAS 32509-66-3) ou Irganox 129 (CAS: 35958-30-6), des antioxydants à noyau unique du type Songsorb 2908 (CAS: 67845-93-6), BHT (CAS: 128-37-0), p-octylphénol, à noyaux multiples comme, par exemple, Topanol CA (CAS: 1843-03-4) ou Wingstay L (31851-03-3).

6. Feuilles selon l'une des revendications 1 à 5, **caractérisées en ce que** ladite feuille présente un indice de jaunissement db inférieur à 2 lorsque celui-ci est déterminé sur un élément stratifié qui est constitué de ladite feuille ayant une épaisseur de 0,76 mm et étant disposée entre deux vitres en verre transparent dont chacune présente une épaisseur de 2 mm.

7. Feuille selon l'une des revendications 1 à 6, **caractérisée en ce que** lesdites feuilles contiennent un ou plusieurs ions métalliques issus du groupe Be, Mg, Ca, Sr, Ba, Zn et Al, dans une proportion supérieure à 5 ppm.

8. Feuille selon l'une des revendications 1 à 7, **caractérisée en ce que** ladite feuille comporte des amines stériquement encombrées de type HALS ou NOR-HALS en tant que photostabilisateurs.

9. Feuille selon l'une des revendications 1 à 8, **caractérisée en ce que** ledit acétal de polyvinyle présente une proportion d'alcool polyvinylique comprise entre 12 et 24 % en poids.

10. Feuille selon l'une des revendications 1 à 9, **caractérisée en ce que** l'on met en oeuvre, en tant que filtres répondant à la formule 1, du (2,2'-méthanediyl-bis[6-(2H-benzotrialzol-2-yl)-4-(2,4,4-triméthylpentane-2-yl)phénol.

11. Feuille selon l'une des revendications 1 à 10, **caractérisée en ce que** l'on met en oeuvre, en tant que filtre UV répondant à la formule 1, ceux ayant un point de fusion supérieur à 100 °C.

12. Utilisation de la feuille selon l'une des revendications 1 à 11 pour fabriquer des éléments de verre feuilleté.

13. Utilisation de la feuille selon les revendications 1 à 11 pour fabriquer des vitrages pour musées, des vitrages pour vitrines, des vitrages pour véhicules à moteur, des vitrages pour avions, dans des modules photovoltaïques, dans des écrans de type LED ou OLED, des téléviseurs, des écrans d'ordinateur, des écrans de grand format, dans des éléments vitrés électrochromes, photochromes, photoélectrochromes.

14. Procédé de fabrication d'une feuille en PVB selon l'une des revendications 1 à 11, consistant à mélanger de l'acétal de polyvinyle, au moins un plastifiant et au moins un filtre UV répondant à la formule 1 sous forme solide dans un dispositif de mélange, pour ensuite extruder le mélange ainsi obtenu.

15. Procédé selon la revendication 14, **caractérisé en ce que** ledit filtre UV est introduit dans ledit dispositif de mélange en suspension dans un liquide vecteur.
